# EUROPEAN PATENT APPLICATION

(11) **EP 0 684 542 A1**
(43) Date of publication of application: **29.11.1995**
(21) Application number: 95303142.4
(22) Date of filing: 10.05.1995
(51) Int. Cl.: G06F 3/033

(54) **Graphical user interface using transparent windows**

(30) Priority: 23.05.1994 US 247837
(71) Applicant: International Business Machines Corporation, Armonk, N.Y. 10504 (US)
(72) Inventor: Isensee, Scott Harlan, Georgetown, Texas 78628 (US); Poston, Ricky Lee, Austin, Texas 78758 (US)
(74) Representative: Williams, Julian David

(57) **Abstract**

A method and apparatus for locating specific information from a plurality of information on a display are provided. The method includes the step of transforming the plurality of information to a predefined transparency state to locate the specific information. The apparatus includes a display for displaying the plurality of information, a processor, and an icon for controlling the processor to transform the plurality of information to a predefined transparency state to locate the specific information.

## Description

The present invention relates generally to computer systems and, more particularly, to an enhanced graphical user interface.

Conventional graphical user interfaces ("GUI") typically represent objects as icons, which may be individually opened as windows. As such, those GUIs allow many windows to be concurrently opened and share the same computer display screen. Using the GUI, the user controls the size and arrangement of these windows, which are typically stacked one on top of the other on the screen.

Several disadvantages and limitations arise from conventional GUIs. First, the user may not know which window a desired object resides in. Second, even if the user knows which window the desired object resides in, the user may not know where that window resides because it may be hidden by other stacked windows. Therefore, the user must reposition and/or resize each stacked window so that the contents of a particular window may be examined. This process is tedious and time consuming.

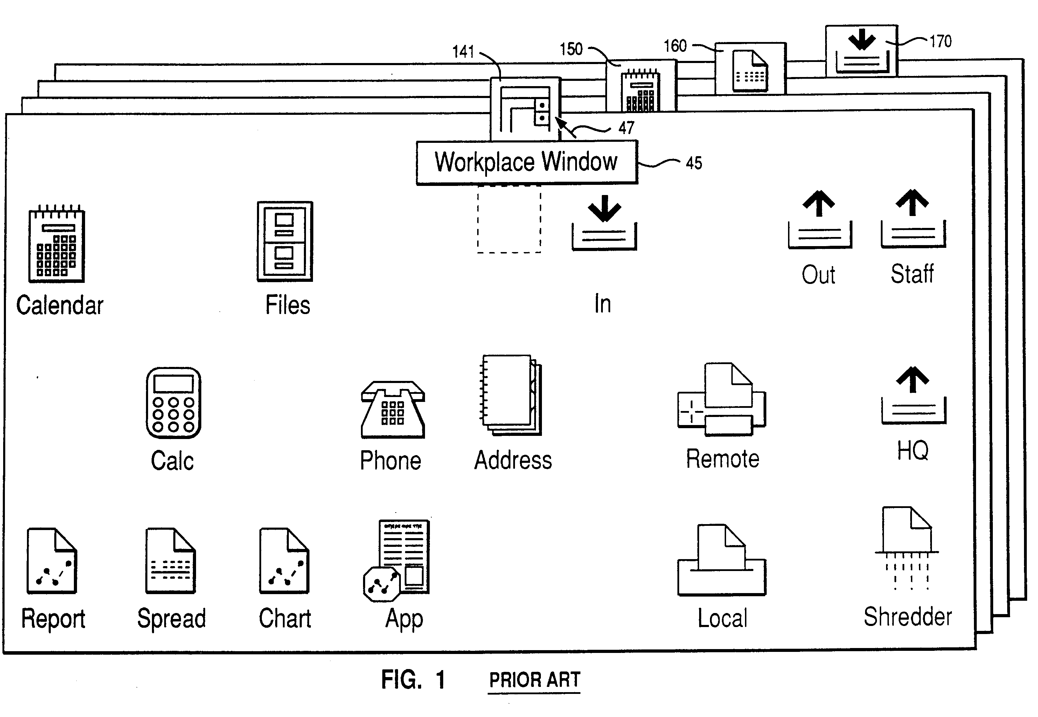

For example, Fig. 1 illustrates a pictorial view of multiple, stacked windows according to U.S. Patent 5,140,678. Each stacked window includes a tab 141, 150, 160, and 170, respectively. When the upper frame of the windows are perfectly aligned or are skewed in an upwardly fashion, the objects inside each window are invisible, but the tabs are visible. However, if the stacked windows are skewed in a downwardly fashion, tabs 150, 160, and 170 would not be visible. Furthermore, if any of the stacked windows were smaller than the top window, its respective tab would not be visible. Accordingly, this technique of identifying multiple stacked windows has limitations and disadvantages.

Accordingly, there is a great need for a technique that enables the user to locate an object in a window without having to rearrange, close, or resize windows.

The present invention provides a method for controlling a computer to locate specific information from a plurality of information on a display, comprising the step of: transforming said plurality of information to a predefined transparency state to locate said specific information.

The present invention also provides a computer system comprising: a processor; a display; and apparatus for locating specific information from a plurality of information, the apparatus comprising means for controlling the processor to transform a plurality of information displayed on the display to a predefined transparency state to locate the specific information.

In order that the invention may be fully understood a preferred embodiment thereof will now be described, by way of example only, with reference to the accompanying drawings in which:
Fig. 1 illustrates a pictorial view of multiple, stacked windows according to U.S. Patent 5,140,678;
Fig. 2 is a schematic diagram of representative hardware which may be used with the present invention;
Fig. 3 is a pictorial view of a fluoroscope icon and multiple windows in accordance with the present invention;
Fig. 4 is a pictorial view of a fluoroscope icon and fluoroscope icon menu in accordance with the present invention;
Fig. 5 is a pictorial view of a transparency adjustment dialogue in accordance with the present invention; and
Fig. 6 is a flow chart in accordance with the present invention.

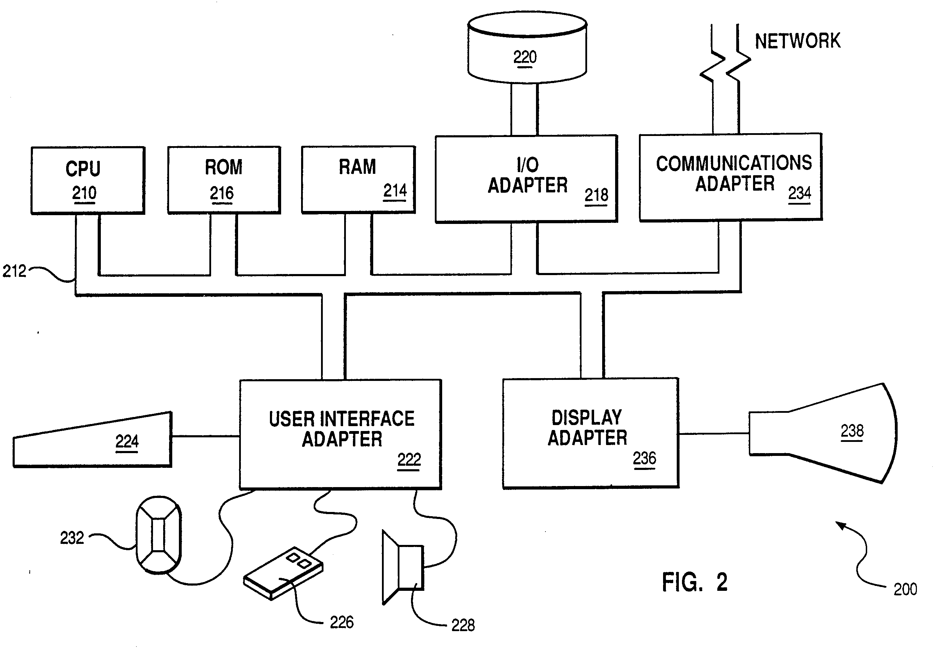

An exemplary embodiment of the present invention includes an apparatus and method for providing an enhanced graphical user interface. The exemplary embodiment is preferably practised in a suitable representative hardware configuration, such as the hardware configuration illustrated in Fig. 2.

Referring to Fig. 2, workstation 200 includes any suitable central processing unit 210, such as a conventional microprocessor, and a number of other units interconnected via system bus 212. Illustratively, workstation 200 includes random access memory ("RAM") 214, read only memory ("ROM") 216, display adapter 236 for connecting system bus 212 to display device 238, and I/O adapter 218 for connecting peripheral devices (e.g. disk and tape drives 220) to system bus 212. Workstation 200 further includes user interface adapter 222 for connecting keyboard 224, mouse 226, speaker 228, microphone 232, and/or other user interface devices, such as a touch screen device (not shown), to system bus 212. Communication adapter 234 connects workstation 200 to a data processing network.

The enhanced graphical user interface ("GUI") (e.g. control element) of the exemplary embodiment resides within a machine-readable media to direct the operation of workstation 200. Any suitable machine-readable media may retain the GUI, such as RAM 214, ROM 216, a magnetic diskette, magnetic tape, or optical disk (the last three being located in disk and tape drives 220).

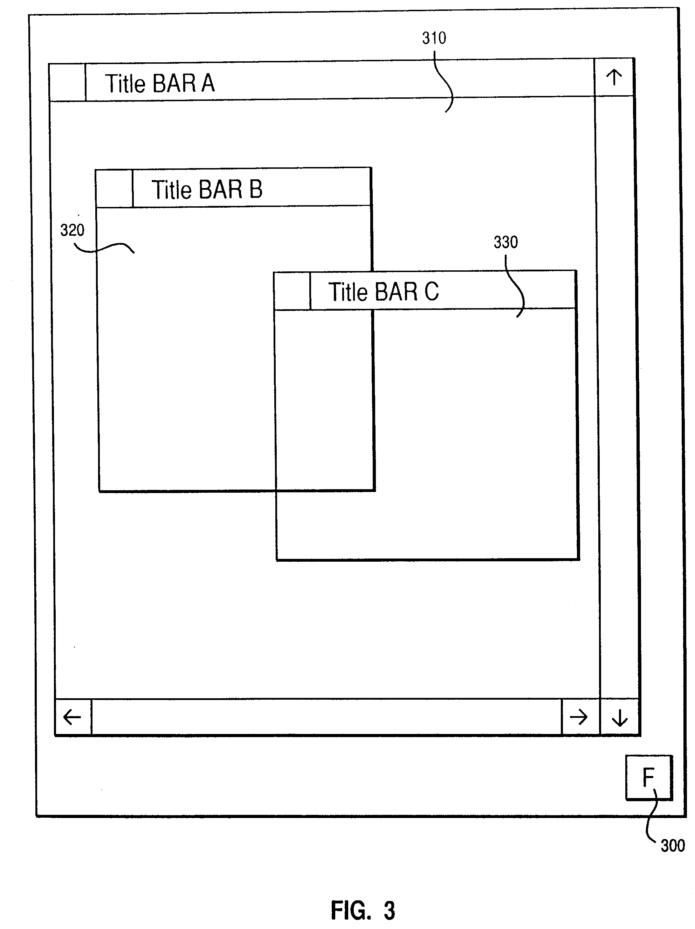

Specific information (e.g. objects) can be located within multiple stacked windows (e.g. information) using the GUI. To do this, the GUI directs CPU 210 to adjust the transparency of the objects within all displayed windows. Specifically, Fig. 3 illustrates the GUI-generated fluoroscope icon ("F icon") 300 and three stacked, transparent windows 310, 320, and 330. While F icon 300 may be positioned anywhere on the top window (e.g. window 310), in the exemplary embodiment, the GUI positions F icon 300 at the lower right side of the desktop.

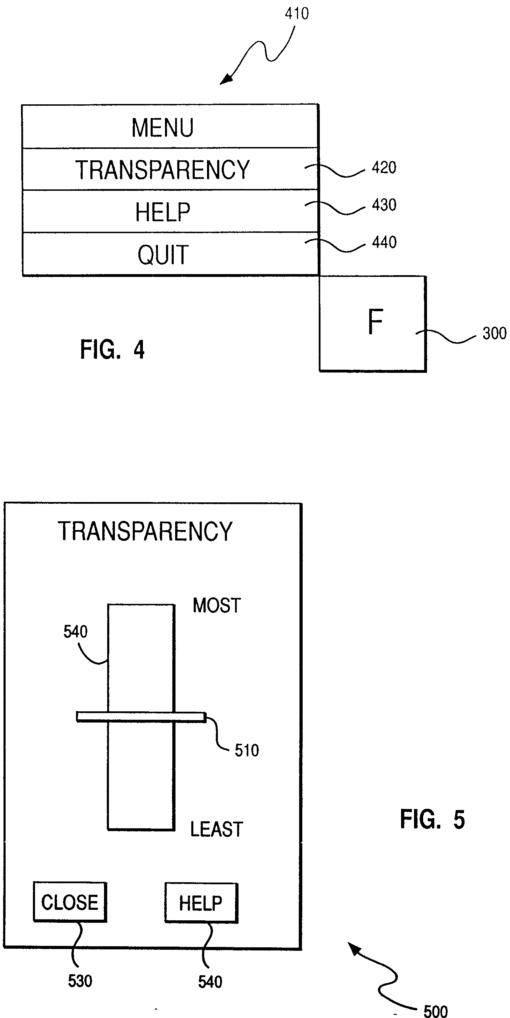

Any suitable pointing device, such as a mouse, may open F icon 300. In the exemplary embodiment, two clicks of a first button on the mouse opens F icon 300. Upon opening F icon 300, the transparency of the stacked windows on the display screen transforms to the transparency of the prior setting (e.g. also referred to as "predetermined transparency state") of transparency scale 540 (see Fig. 5). Fig. 3 illustrates windows which have been transferred to their most transparent state. As such, only the frames and title bars of those windows can be viewed.

Referring to Fig. 4, if the user desires to change the predetermined transparency state, the user positions the mouse over F icon 300 and clicks the second button on the mouse. In response, menu 410 appears. Using the mouse, the user may select one of three options, namely transparency button 420, help button 430, or quit button 440. If the user selects quit button 440, menu 410 disappears. Help button 430 provides a dialogue (not shown) with instructions on how to operate F icon 300.

If transparency button 420 is selected, transparency adjustment dialogue ("dialogue") 500 appears on the display screen. Referring to Fig. 5, dialogue 500 includes transparency scale 540, slider 510, close button 530, and help button 420. Transparency scale 540 is an adjustable transparency scale that provides the most transparency at the top of the scale and the least transparency at the bottom of the scale. Using the mouse, the user may adjust the amount of transparency by moving slider 510 up and down transparency scale 540. If slider 510 is positioned at the top of scale 540, all objects on every stacked window are transparent, i.e. cannot be seen, except for their frames and title bars. Therefore, at the highest transparency, the user views only the frames and title bar or title icon for every window stacked on the display screen. (For example, see Fig. 3).

Conversely, if slider 510 is positioned at the bottom of scale 540, the least amount of transparency is provided. As such, each object of every stacked window, including the frame and title bar or title icon, is displayed on the display screen. The only thing that is transparent is the window's background.

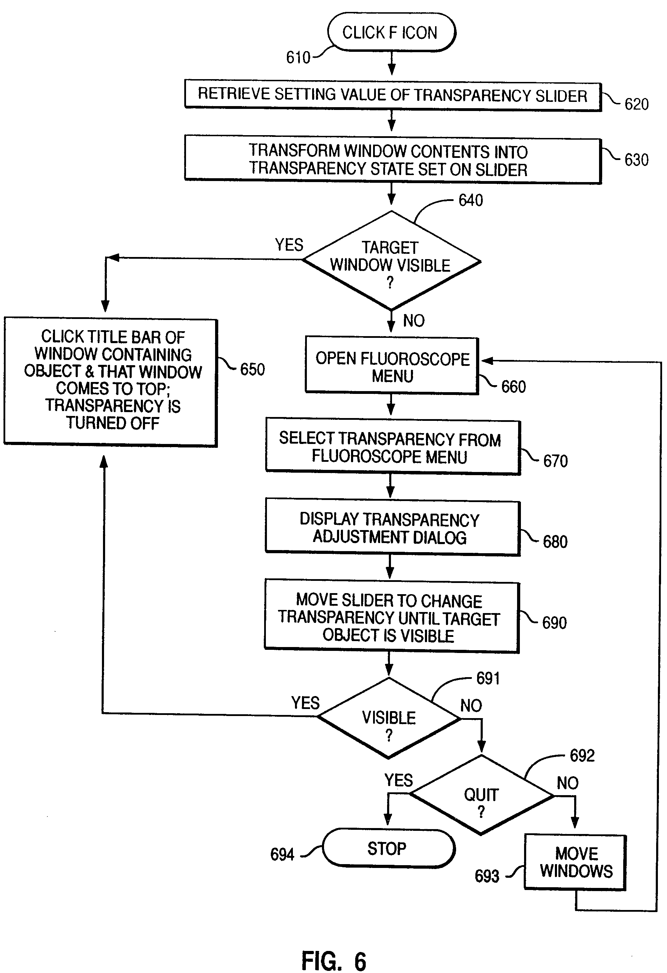

Fig. 6 illustrates a flow chart of the exemplary embodiment. Referring to Figs. 5 and 6, at 610, F icon 300 is opened. In response, the GUI retrieves the last transparency setting value (e.g. state) of slider 510. At 630, the GUI transforms the contents of the stacked windows into the previous transparency state set on slider 510. At 640, if the target window is visible, the title bar for that target window is clicked so that the window appears at the top of the stack. Further, the GUI turns off the transparency. Alternatively, the user may click the mouse while simultaneously pressing a keyboard modifier key to keep the transparency function on when the selected window appears at the top.

However, if the target window is not visible, menu 410 may be opened at 660. At 670, the user selects transparency button 420 from menu 410. In response, at 680, the GUI displays transparency adjustment dialogue 500. At 690, the user moves slider 510 until the target object is located. At 691, if the desired target object is located, the title bar of the window containing that object is clicked at 650. However, if the desired target object is not located, the user may quit at 694 or move/resize some or all of the stacked windows at 693. Control then returns to 660.

## Claims

1. A computer system comprising:
a processor;
a display; and
apparatus for locating specific information from a plurality of information, the apparatus comprising means for controlling the processor to transform a plurality of information displayed on the display to a predefined transparency state to locate the specific information.

2. A computer system as claimed in claim 1 wherein the controlling means comprises an icon.

3. A computer system as claimed in claim 1 or claim 2 further comprising:
means for controlling the processor to adjust the transparency state until the specific information is displayed on the display.

4. A computer system as claimed in claim 3 wherein the adjusting means comprises:
a transparency adjustment dialogue having a transparency scale; and
a slider for moving along the transparency scale until the specific information is located.

5. A computer system as claimed in claim 4 wherein the top of the transparency scale provides more transparency and the bottom of the transparency scale provides less transparency.

6. A method for controlling a computer to locate specific information from a plurality of information on a display, comprising the step of:
transforming said plurality of information to a predefined transparency state to locate the specific information.

7. A method as claimed in claim 6 further comprising the step of:
adjusting the transparency state until the specific information is displayed on the display.

8. A method as claimed in claim 7 wherein the adjusting step comprises the steps of:
displaying a transparency adjustment dialogue having a transparency scale; and
moving a slider along the transparency scale until the specific information is located.

9. A method as claimed in claim 8 wherein the top of the scale provides more transparency and the bottom of the scale provides less transparency.
